# EUROPÄISCHE PATENTANMELDUNG

(11) **EP 4 684 999 A2**
(43) Veröffentlichungstag der Anmeldung: **28.01.2026**
(21) Anmeldenummer: 25184384.3
(22) Anmeldetag: 23.06.2025
(51) Int. Cl.: B60L 1/00, B60K 1/02, B60K 6/387, B60K 6/547, B60K 17/02, B60L 15/20

(54) **ANTRIEBSANORDNUNG FÜR EINEN TRAKTOR MIT ZWEI ELEKTROMOTOREN, TRAKTOR UND VERFAHREN**

(30) Priorität: 24.07.2024 DE 102024120999
(71) Anmelder: CLAAS Tractor S.A.S., 78141 Vélizy-Villacoublay Cedex (FR)
(72) Erfinder: Heymann, Philipp, 59519 Möhnesee Wamel (DE); Middendorf, Heiko, 59581 Warstein (DE); Auer, Peter, 33102 Paderborn (DE); Drüke, Simon, 33154 Salzkotten (DE); Otten, Uli, 67361 Freisbach (DE)
(74) Vertreter: CLAAS Gruppe

(57) **Zusammenfassung**

Die Erfindung betrifft eine Antriebsanordnung (4) für einen batterieelektrischen Traktor (1), die Antriebsanordnung (4) aufweisend
ein Getriebe (5) mit einem einen ersten Elektromotor (11) umfassenden ersten Zweig (10) für den Fahrantrieb des Traktors (1) und einem einen zweiten Elektromotor (21) umfassenden zweiten Zweig (20) für den Antrieb von Hilfsaggregaten (2) des Traktors (1), wobei der erste Zweig (10) zwischen zumindest zwei Übersetzungsverhältnissen schaltbar ist; und
eine Verbindungseinrichtung (30), die eingerichtet ist, den ersten (10) und den zweiten (20) Zweig drehmomentübertragend miteinander zu verbinden, um den zweiten Elektromotor (21) für den Fahrantrieb des Traktors (1) zu nutzen.

## Beschreibung

Die vorliegende Erfindung betrifft eine Antriebsanordnung für einen Traktor, welche ein Getriebe mit einem ersten Elektromotor für den Fahrantrieb des Traktors und einem zweiten Elektromotor für den Antrieb von Hilfsaggregaten des Traktors aufweist.

Heutzutage dominieren verbrennungsmotorisch betriebene Traktoren die Landwirtschaft. Aufgrund der stetig zunehmenden verbesserten und kostengünstiger werdenden Energiespeicher und Elektromotoren werden allerdings vermehrt auch Elektrifizierungsansätze für Traktoren entwickelt. Um für die Hilfsaggregate Drehmomente und/oder Drehzahlen möglichst unabhängig von der Fahrgeschwindigkeit des Traktors bereitstellen zu können, sind aus der Praxis bereits Antriebsanordnungen mit zwei Elektromotoren bekannt.

Die DE 10 2019 214 351 A1 beschreibt eine zwei Elektromotoren aufweisende Antriebsanordnung, bei der ein Elektromotor nur den Fahrantrieb bereitstellen kann, wobei der andere Elektromotor sowohl den Fahrantrieb unterstützen oder übernehmen kann, als auch den Antrieb von Hilfsaggregaten bereitstellt. Die Antriebsanordnung ist kostenintensiv und benötigt recht viel Bauraum. Ferner sind die Elektromotoren mechanisch stark voneinander abhängig. Zudem können im Betrieb mit dem anderen Elektromotor die Hilfsaggregate nur noch abhängig von der Fahrgeschwindigkeit versorgt werden.

Insoweit stellt sich die Aufgabe, im Hinblick auf eine Antriebsanordnung für einen Traktor Lösungen anzugeben, um den Fahrantrieb und den Antrieb von Hilfsaggregaten wirtschaftlich und dennoch flexibel umsetzen zu können. Insbesondere sollen der Fahrantrieb und der Antrieb von Hilfsaggregaten zumindest im Wesentlichen unabhängig voneinander realisiert werden, wobei gleichwohl ein kompaktes Getriebe erwünscht ist. Insbesondere sollen die Nachteile aus dem Stand der Technik vermieden oder zumindest reduziert werden.

Die Aufgabe wird erfindungsgemäß durch die Merkmale der unabhängigen Ansprüche gelöst. Vorteilhafte Ausführungsformen sind in den Unteransprüchen, in den Figuren, in der Beschreibung sowie in den anliegenden Figuren angegeben.

Vorgeschlagen wird eine Antriebsanordnung für einen batterieelektrischen Traktor. Die Antriebsanordnung weist ein Getriebe mit einem ersten Zweig, der einen ersten Elektromotor für den Fahrantrieb des Traktors umfasst, und einen zweiten Zweig, der einen zweiten Elektromotor für den Antrieb von Hilfsaggregaten des Traktors umfasst, auf. Vorgeschlagen wird, dass der erste Zweig zwischen zumindest zwei Übersetzungsverhältnissen bzw. Gängen, insbesondere lastunterbrechend, schaltbar ist. Insbesondere ist eine Verbindungseinrichtung vorgesehen, die eingerichtet ist, den ersten und den zweiten Zweig drehmomentübertragend miteinander zu verbinden, um den zweiten Elektromotor für den Fahrantrieb des Traktors zu nutzen, bevorzugt in einer Geschlossenstellung, bevorzugt während eines Schaltvorgangs im ersten Zweig, insbesondere während eines Hochschaltens.

In anderen Worten, beispielsweise, wird ein elektrifizierter Antriebsstrang für einen Traktor mit zwei Motoren vorgeschlagen. Ein Getriebe im Antriebsstrang weist zwei oder mehr Fahrstufen auf und ist mittels des ersten Motors zum Fahren des Traktors vorgesehen. Der zweite Motor ist für den Arbeitsantrieb mittels des Getriebes vorgesehen. Das Getriebe ist ausgebildet, um den zweiten Motor zumindest vorübergehend zum Fahren des Traktors zu verwenden bzw. in den entsprechenden Getriebestrang einzukuppeln. Insbesondere kann der zweite Motor im und/oder um den Bereich des Schaltpunkts eingekuppelt werden, um diesen abzustützen und einen Schaltruck zu reduzieren oder aber zu vermeiden.

In weiteren Worten, beispielsweise, wird eine Antriebsanordnung bzw. ein Antriebsstrang vorgeschlagen, die/der ein Getriebe mit einem ersten und einem zweiten Elektromotor aufweist, also mit zumindest zwei Elektromotoren, und die/der zwei oder mehr insbesondere unterschiedliche Geschwindigkeitsbereiche bereitstellen kann. Der erste Elektromotor kann sowohl in einem ersten Geschwindigkeitsbereich als auch in einem zweiten Geschwindigkeitsbereich mit einer Ausgangswelle für den Fahrantrieb des batterieelektrischen Traktors und der zweite Elektromotor sowohl im ersten Geschwindigkeitsbereich als auch im zweiten Geschwindigkeitsbereich mit einer Ausgangswelle zum Antrieb von Hilfsaggregaten des batterieelektrischen Traktors gekoppelt sein, insbesondere wobei der zweite Elektromotor bei einem Schaltvorgang zwischen dem ersten Geschwindigkeitsbereich und dem zweiten Geschwindigkeitsbereich bedarfsweise und/oder temporär mit der Ausgangswelle für den Fahrantrieb koppelbar ist.

Es ist erfindungsgemäß möglich, beide Elektromotoren für den Fahrantrieb zu nutzen. Die Erfindung schafft ferner den Vorteil, einen Ruck beim Hochschalten zu minimieren oder zu vermeiden. Die Erfindung reduziert die Abhängigkeit beider Elektromotoren voneinander.

Bei konventionell verbrennungsmotorisch betriebenen Traktoren sind die Traktorgetriebe, ungeachtet der Tatsache, ob es sich um ein sogenanntes Lastschaltgetriebe oder ein leistungsverzweigtes Getriebe (CVT - Continuously Variable Transmission) handelt, speziell auf den Verbrennungsmotor (bspw.: minimale Leerlaufdrehzahl; Maximaldrehzahl; flexible Leistungsaufteilung auf den Fahrantrieb und die Zapfwelle (PTO); Entkopplung der Fahrgeschwindigkeit von der Verbrennungsmotordrehzahl) abgestimmt.

Die Erfindung befasst sich mit dem Problem, dass die bei verbrennungsmotorisch betriebenen Traktoren geforderte Drehzahl nicht zu kompakten und kostengünstigen Elektromaschinen (E-Maschinen) bzw. Elektromotoren passt, deren Drehzahlbereich typischerweise wesentlich höher liegt. Die Anforderungen an ein Getriebe einer elektrifizierten Antriebsanordnung sind demnach grundsätzlich andere als die Anforderungen an ein Getriebe einer verbrennungsmotorisch betriebenen Antriebsanordnung. Die Effizienz spielt in einem batterieelektrischen Traktor eine deutlich größere Rolle als in einem konventionell verbrennungsmotorisch betriebenen Traktor.

Die Erfindung vermeidet auch das Problem der verlustbehafteten Leistungsverzweigung von leistungsverzweigten Getrieben. Diese Getriebe wandeln einen Teil der mechanischen Leistung in hydraulische oder auch elektrische Leistung um, um sie anschließend über Planetensätze mit variabler Drehzahl wieder mechanisch dem Fahrantrieb bereit zu stellen. Die Erfindung hat erkannt, dass eine solche verlustbehaftete doppelte Wandlung bei einem batterieelektrischen Antriebsstrang unwirtschaftlich ist. Bei einem Lastschaltgetriebe wird die Drehzahl am Abtrieb über eine Reihe von Getriebestufen über eine Vielzahl von Gängen an den Abtrieb gebracht. Durch die hohe Anzahl an Zahnrädern und Kupplungen wird die Effizienz ebenfalls beeinträchtigt, sodass auch ein solches Getriebe für einen batterieelektrischen Traktor wenig wirtschaftlich ist. Außerdem ist der Fahrkomfort bei derartigen Getrieben unzureichend. Insbesondere handelt es sich bei dem Getriebe der beanspruchten Antriebsanordnung nicht um ein leistungsverzweigtes Getriebe.

Ein Traktor ist insbesondere eine landwirtschaftliche Arbeitsmaschine bzw. ein landwirtschaftliches Fahrzeug. Als batterieelektrischer Traktor kann der Traktor ganz oder zumindest teilweise elektrisch angetrieben werden, d.h. hinsichtlich des Fahrantriebs und insbesondere hinsichtlich Hilfsaggregaten des Traktors. Elektrisch angetrieben bedeutet insbesondere, dass ein Elektromotor zum Antrieb genutzt werden kann. Der Traktor steht typischerweise über Bodeneingriffsmittel an jeweils der Vorderachsbaugruppe und der Hinterachsbaugruppe in Kontakt mit dem Boden bzw. Untergrund. Die Bodeneingriffsmittel, beispielsweise Räder und/oder Raupenlaufwerke, können angetrieben sein bzw. werden.

Die Antriebsanordnung weist insbesondere ein Getriebe mit dem ersten und dem zweiten Zweig auf. Es können auch mehr als zwei Zweige vorgesehen sein. Ein Zweig ist beispielsweise als Drehmomentübertragungsstrecke zu verstehen. Ein Zweig des Getriebes erstreckt sich insbesondere zwischen einem Eingang und einem Ausgang, beispielsweise vom jeweiligen Elektromotor bis hin zu jeweiligen Ausgangswelle. Die Antriebsanordnung, insbesondere das Getriebe, kann den ersten Elektromotor und den zweiten Elektromotor aufweisen.

Zumindest einer der Zweige, bevorzugt der erste Zweig, ist insbesondere zwischen zwei oder mehr Übersetzungsverhältnissen bzw. Gängen schaltbar. Es kann ein Schaltvorgang vollzogen werden, der bevorzugt lastunterbrechend bzw. unter Unterbrechung des Kraftflusses erfolgen kann oder muss. Ein Übersetzungsverhältnis korrespondiert zu einem Geschwindigkeitsbereich bzw. zu einer Spreizung, das/die der jeweilige Zweig abdecken kann. Beispielsweise ist das erste Übersetzungsverhältnis niedriger als das zweite bzw. kürzer übersetzt als das, um durch Hochschalten vom ersten ins zweite Übersetzungsverhältnis einen höher liegenden Geschwindigkeitsbereich abdecken zu können. Insbesondere sind die Geschwindigkeitsbereiche bzw. Übersetzungsverhältnisse unterschiedlich. Bevorzugt weichen die Übersetzungsverhältnisse voneinander ab bzw. sind unterschiedlich. Bevorzugt sind ein niedriges und ein hohes Übersetzungsverhältnis vorgesehen. Die Übersetzungsverhältnisse bzw. Spreizungen können sich überlappen. Es können auch weitere Übersetzungsverhältnisse bzw. Geschwindigkeitsbereiche vorgesehen sein.

Der erste Zweig umfasst den ersten Elektromotor für den Fahrantrieb des Traktors bzw. ist von diesem angetrieben. Der erste Elektromotor kann ein Drehmoment bereitstellen, beispielsweise um den mit der Antriebsanordnung versehenen Traktor mittels Drehmomentfluss über den ersten Zweig anzutreiben. Der erste Zweig endet, insbesondere ausgehend vom ersten Elektromotor, bevorzugt an einer ersten Ausgangswelle oder mehreren davon. An der ersten Ausgangswelle kann dann, beispielsweise über weitere Welle(n) bzw. indirekt, das jeweilig angetriebene Bodeneingriffsmittel drehmomentübertragend angebunden werden.

Der zweite Zweig umfasst den zweiten Elektromotor für den Antrieb von Hilfsaggregaten des Traktors bzw. Hilfsaggregate sind von diesem angetrieben. Der zweite Elektromotor kann ein Drehmoment bereitstellen, beispielsweise um Hilfsaggregate über eine Zapfwelle mittels Drehmomentfluss über den zweiten Zweig anzutreiben. Der zweite Zweig endet, insbesondere ausgehend vom zweiten Elektromotor, bevorzugt an einer zweiten Ausgangswelle bzw. Zapfwelle oder mehreren davon. An der zweiten Ausgangswelle kann dann, beispielsweise über weitere Welle(n) bzw. indirekt oder auch direkt, das oder die jeweilig angetriebenen Hilfsaggregate drehmomentübertragend angebunden werden.

Insbesondere ist vorgesehen, dass der erste und der zweite Zweig zumindest im Wesentlichen parallel angeordnet sind, damit der erste Elektromotor für den Fahrantrieb und der zweite Motor für den Antrieb der Hilfsaggregate verwendet werden kann. Um auch bei höheren Geschwindigkeiten weiterhin den ersten Elektromotor für den Fahrantrieb verwenden zu können, kann das Übersetzungsverhältnis im ersten Zweig geschaltet werden. Dieser Ansatz ist eine besonders vorteilhafte Neuerung, da so die Flexibilität bei einem elektrifizierten Fahrantrieb gesteigert wird, indem ein größerer Geschwindigkeitsbereich abgedeckt wird.

Insbesondere kann sich der zweite Motor grundsätzlich auf die Bereitstellung von Drehmoment für die Hilfsaggregate konzentrieren und beispielsweise nur im Schaltpunkt bzw. beim Schaltvorgang Unterstützung im ersten Zweig für den Fahrantrieb bereitstellen. Es ist überdies vorteilhaft möglich, einen durch den Schaltvorgang normalerweise entstehenden Schaltruck durch den zweiten Elektromotor zu überbrücken bzw. abzufangen. Ansonsten kann der zweite Elektromotor mit Blick auf die Hilfsaggregate vorteilhaft bei optimaler, insbesondere niedrigstmöglicher, Drehzahl betrieben werden, um energieeffizient zu sein.

Die Verbindungseinrichtung kann auch als Kupplungseinrichtung verstanden werden. Die Verbindungseinrichtung kann die Zweige drehmomentübertragend miteinander verbinden bzw. ist hierzu ausgebildet. Beispielsweise kann die Verbindungseinrichtung die Zweige im Fahrbetrieb bzw. bei zumindest einem drehenden Zweig verbinden. Beispielsweise kann die Verbindungseinrichtung einen Formschluss zwischen den Zweigen herstellen. Es ist möglich, dass die Verbindungseinrichtung ausgebildet ist, die Zweige bei zueinander unterschiedlicher Drehzahl miteinander zu verbinden, beispielsweise mittels eines Reib- bzw. Kraftschlusses.

Die Verbindungseinrichtung kann eine Reibkupplung bzw. reibschlüssig wirkende Kupplung aufweisen, die eingerichtet ist, in einer/der Geschlossenstellung den ersten und den zweiten Zweig lösbar miteinander zu verbinden. Die Verbindungseinrichtung, insbesondere die Reibkupplung, kann schaltbar und/oder als schaltbare Kupplung ausgebildet sein. Die Verbindungseinrichtung kann zwischen der Geschlossenstellung und einer Offenstellung verstellt werden, um einen lösbaren Reibschluss bereitzustellen. Die Verbindungseinrichtung kann eine Federkraft bereitstellen, um Rotoren gegeneinander zu drücken.

Die Verbindungseinrichtung kann eine synchronisierte und/oder klauengeschaltete Schalteinrichtung aufweisen. Insbesondere kann ein Synchronisator und/oder eine Klauenschalteinrichtung vorgesehen sein.

Beispielsweise kann die Verbindungseinrichtung in der Offenstellung den ersten und den zweiten Zweig voneinander entkoppeln, so dass die Zweige sich relativ zueinander frei drehen können. In der Geschlossenstellung kann die Verbindungseinrichtung dagegen eine feste bzw. drehmomentübertragende Verbindung zwischen den Zweigen bereitstellen.

Die zwei Zweige können drehmomentübertragend miteinander verbunden oder miteinander verbindbar sein, beispielsweise mittels der Verbindungseinrichtung, insbesondere in der Geschlossenstellung. Die Verbindungseinrichtung kann beispielsweise eine zumindest mittelbare und insbesondere im Fahrbetrieb schaltbare Verbindung zwischen der ersten und der zweiten Ausgangswelle bereitstellen. So kann nicht nur der erste, sondern auch der zweite Elektromotor zum Fahrantrieb genutzt werden. So kann ebenfalls nicht nur der zweite, sondern auch der erste Elektromotor zum Antrieb der Hilfsaggregate verwendet werden.

Die Reibkupplung kann als trockene Reibkupplung ausgebildet sein. Die Reibkupplung kann als nasse Reibkupplung ausgebildet sein.

Die Reibkupplung kann eine Lamellenkupplung, insbesondere eine trockene oder nasse Lamellenkupplung, aufweisen oder sein. Die Reibkupplung kann mit Öl gefüllt sein. Das Getriebe kann mit Öl, insbesondere Getriebeöl, gefüllt sein. Die Reibkupplung kann im Getriebeöl teilweise oder vollständig oder gar nicht eingetaucht angeordnet sein. Die Reibkupplung weist typischerweise einen beispielsweise mit Reibbelägen bzw. Kupplungslamellen versehenen Rotor auf. Die Reibkupplung weist typischerweise einen mit dem Rotor zusammenwirkenden weiteren Rotor auf. Einer der Rotoren kann seitens des ersten Zweiges und der andere der Rotoren seitens des zweiten Zweiges angeordnet sein. In der Offenstellung sind die Rotoren vorzugsweise voneinander beabstandet und in der Geschlossenstellung sind die Rotoren vorzugsweise gegeneinander gepresst, um durch den entstehenden Reibschluss bzw. Kraftschluss Drehmoment übertragen zu können. Im Übergang zwischen den Stellungen können Drehzahlabweichungen reibend ausgeglichen werden.

Beispielsweise kann mittels der Verbindungseinrichtung und in Kombination mit zwei Zweigen und zwei Elektromotoren beim Lastwechsel bzw. einem Schaltvorgang ein Ruck reduziert werden. Exemplarisch kann vorübergehend mit dem zweiten Elektromotor der Fahrantrieb übernommen werden, um den Ruck beim Hochschalten im ersten Zweig zu minimieren. Insbesondere kann der Schaltruck minimiert werden, indem der zweite Zweig drehzahlangepasst über die Verbindungseinrichtung mit dem ersten Zweig verbunden wird, wenn geschaltet werden soll, um dann das zum Fahren notwendige Drehmoment durch den zweiten und nicht mehr durch den ersten Elektromotor bereitzustellen. Während der zweite Elektromotor antreibt und der erste Elektromotor im Wesentlichen lastfrei ist, kann im ersten Zweig der aktive Gang herausgenommen werden und die Drehzahl an die Fahrgeschwindigkeit bzw. den zu schaltenden Gang angepasst werden, um dann zu schalten, und um dann das zum Fahren notwendige Drehmoment wieder durch den ersten und nicht mehr durch den zweiten Elektromotor bereitzustellen. Der voranstehend beschriebene Prozess kann zu einer kontinuierlichen Beschleunigung des Traktors verhelfen, ohne dass eine Unterbrechung oder Reduktion der Beschleunigung beim Hochschalten erfolgen muss.

Der erste Zweig kann einen Synchronisator bzw. Synchronizer aufweisen, der zum Bereitstellen der zumindest zwei Übersetzungsverhältnisse in zumindest zwei Stellungen bzw. Gänge schaltbar ist. Der Synchronisator kann zudem in eine Neutralstellung schaltbar sein, wobei in der Neutralstellung der erste Zweig aufgetrennt ist. In der Neutralstellung ist sozusagen der Gang herausgenommen und der erste Elektromotor kann keinen Fahrantrieb leisten. In den anderen Stellungen, beispielsweise in einer ersten und einer zweiten Stellung, kann ein jeweiliges Übersetzungsverhältnis bzw. der entsprechende Gang ausgewählt sein, um den Fahrantrieb bei zwei entsprechenden getrieblichen Spreizungen zu realisieren. Vorzugsweise ist ein erstes Übersetzungsverhältnis für niedrige Geschwindigkeiten, beispielsweise im Bereich bis 20 km/h vorgesehen. Vorzugsweise ist ein zweites Übersetzungsverhältnis für höhere Geschwindigkeiten, beispielsweise im Bereich zwischen 10 und 40 km/h vorgesehen.

Der Synchronisator kann einen Synchronring aufweisen oder dadurch gebildet sein. Der Synchronring kann zwischen den Stellungen verschoben werden. Der Synchronisator ist insbesondere ausgebildet, um in Abhängigkeit von seiner Stellung eine drehmomentübertragende Verbindung bezüglich zumindest zwei oder genau zwei Übersetzungsverhältnissen im ersten Zweig bereitzustellen.

Der erste Zweig kann die Verbindungseinrichtung zwischen dem Synchronisator und einer/der ersten Ausgangswelle aufweisen, insbesondere auf der ersten Ausgangswelle, um den zweiten Elektromotor zumindest mittelbar mit der ersten Ausgangswelle zu verbinden, wenn die Verbindungseinrichtung in der Geschlossenstellung ist. Beispielsweise ist ein/der Rotor der Verbindungseinrichtung drehmomentübertragend mit dem zweiten Zweig verbunden und ein/der weitere Rotor der Verbindungseinrichtung ist drehmomentübertragend mit dem ersten Zweig verbunden.

Der zweite Zweig kann eingerichtet sein, die Verbindungseinrichtung über eine zweite Ausgangswelle anzutreiben. Beispielsweise kann der Rotor mittelbar oder unmittelbar mit der zweiten Ausgangswelle drehmomentübertragend verbunden sein. Es ist möglich, dass der zweite Zweig, insbesondere die zweite Ausgangswelle, getrieblich bzw. über eine Getriebestufe mit der Verbindungseinrichtung verbunden ist. Es ist auch möglich, dass der zweite Zweig, insbesondere die zweite Ausgangswelle, direkt mit der Verbindungseinrichtung verbunden ist.

Der erste Elektromotor und der zweite Elektromotor sind vorzugsweise unterschiedlich ausgebildet, insbesondere im Hinblick auf Baugröße und/oder Leistungsdaten. Damit kann ein kompakterer Aufbau erhalten werden und es kann eine anforderungsgemäße Dimensionierung der Elektromotoren erhalten werden, um Kosten bzw. Energie und Ressourcen einzusparen. Beispielsweise weist der erste Elektromotor ein höheres maximales Drehmoment als der zweite Elektromotor auf. Beispielsweise weist der zweite Elektromotor eine geringere Baulänge als der zweite Elektromotor auf, insbesondere betrachtet in Richtung der jeweiligen Ausgangswelle. Insbesondere ist der erste Elektromotor leistungsstärker und/oder drehmomentstärker als der zweite Elektromotor ausgebildet. Beispielsweise können Elektromotoren mit unterschiedlicher Nennleistung, unterschiedlichem Nenn-Drehmoment und/oder unterschiedlichem Nenn-Strom vorgesehen sein.

Der erste Elektromotor und der zweite Elektromotor können baugleich sein bzw. baugleich ausgebildet sein. Beispielsweise können Elektromotoren mit gleicher Nennleistung, gleichem Nenn-Drehmoment und/oder gleichem Nenn-Strom vorgesehen sein.

Beispielsweise handelt es sich bei dem oder den Elektromotoren um Drehstrom-Elektromotoren, insbesondere Asynchron- oder Synchronmotoren.

Der erste Elektromotor und der zweite Elektromotor können nebeneinander und/oder achsparallel zueinander angeordnet sein. Beispielsweise können die Elektromotoren zumindest abschnittsweise in einem Rahmen angeordnet sein. Die Ausgangswellen der Elektromotoren können zur gleichen Seite bzw. in die gleiche Richtung weisen. Insoweit werden die Elektromotoren vorteilhaft platzsparend angeordnet.

Der Traktor, insbesondere die Getriebebaugruppe bzw. die Antriebsanordnung, kann eine zweite Ausgangswelle für den Antrieb von Hilfsaggregaten aufweisen bzw. bereitstellen. Die zweite Ausgangswelle kann an gegenüberliegenden Seiten des Getriebes zugänglich sein bzw. derart angeordnet sein. Die zweite Ausgangswelle kann auch als die Zapfwelle oder "Power Takeoff"-Welle bzw. "PTO"-Welle für Hilfsaggregate verstanden werden. Die zweite Ausgangswelle kann den Ausgang des zweiten Zweigs des Getriebes darstellen. Die zweite Ausgangswelle kann sich durch das Getriebe erstrecken, um beidseitig zugänglich zu sein. Es können auch mehrere zweite Ausgangswellen vorgesehen sein.

Insbesondere kann eine/die Antriebsanordnung ein Getriebesteuergerät aufweisen. Das Getriebesteuergerät kann einzelne oder mehrere vorliegend beschriebene Merkmale bzw. Verfahrensmerkmale in der Antriebsanordnung umsetzen. Das Getriebesteuergerät kann beispielsweise zum Ansteuern bzw. Schalten der Verbindungseinrichtung eingerichtet sein. Das Getriebesteuergerät kann beispielsweise zum Ansteuern bzw. Betreiben des ersten und/oder des zweiten Elektromotors vorgesehen sein. Beispielsweise ist das Getriebesteuergerät programmierbar und/oder weist ein Steuerungsprogramm auf. Es können auch mehrere Getriebesteuergeräte vorgesehen sein.

Das Getriebesteuergerät bzw. die Antriebsanordnung kann eingerichtet sein, (die) zwei Elektromotoren der Antriebsanordnung anzusteuern, um eine durch den ersten Elektromotor bereitgestellte Ausgangsdrehzahl für einen Fahrantrieb zwischen mindestens zwei Geschwindigkeitsbereichen zu schalten, und um beim Schalten zwischen den mindestens zwei Geschwindigkeitsbereichen bzw. den zwei Geschwindigkeitsbereichen ein Unterstützungsmoment durch den zweiten Elektromotor bereitzustellen, so dass ein Schaltruck bzw. eine Drehmomentreduktion am Ausgang der Antriebsanordnung für den Fahrantrieb (insbesondere an einer ersten Ausgangswelle) minimiert oder vermieden wird.

Es können auch mehr als zwei Geschwindigkeitsbereiche vorgesehen sein, beispielsweise drei, vier, fünf oder mehr Geschwindigkeitsbereiche, die voneinander abweichen können.

Die Antriebsanordnung bzw. das Getriebesteuergerät kann eingerichtet sein, (die) zwei Elektromotoren der Antriebsanordnung gleichzeitig für den Fahrantrieb zu nutzen.

Vorgeschlagen wird weiter eine Antriebsanordnung für einen batterieelektrischen Traktor, die eingerichtet ist, den Traktor in zwei Geschwindigkeitsbereichen bzw. mithilfe von zwei wählbaren Übersetzungsverhältnissen mittels eines ersten Elektromotors anzutreiben und den Traktor bei einem Schaltvorgang zwischen den zwei Geschwindigkeitsbereichen mittels eines zweiten Elektromotors anzutreiben.

Vorgeschlagen wird weiter ein batterieelektrischer Traktor, der eine Antriebsanordnung, insbesondere wie vorliegend beschrieben, für den Fahrantrieb des Traktors und optional zum Antreiben von Hilfsaggregaten des Traktors aufweist.

Vorgeschlagen wird weiter ein Verfahren zum Betreiben eines/des batterieelektrischen Traktors mit einer ein Getriebe aufweisenden Antriebsanordnung. Insbesondere ist vorgesehen, dass der Traktor mittels eines ersten Elektromotors in einem ersten Geschwindigkeitsbereich angetrieben wird und optional Hilfsaggregate des Traktors mittels eines zweiten Elektromotors angetrieben werden, und ein Schaltvorgang des Getriebes durchgeführt wird und der Traktor bei dem Schaltvorgang mittels eines bzw. des zweiten Elektromotors angetrieben wird. Der Schaltvorgang ist insbesondere nach dem Antreiben in dem ersten Geschwindigkeitsbereich vorgesehen. Nach dem Schaltvorgang kann der Traktor mittels des ersten Elektromotors in einem zweiten Geschwindigkeitsbereich angetrieben werden. Vor dem Schaltvorgang kann der zweite Elektromotor an eine der Fahrgeschwindigkeit des Traktors entsprechende Drehzahl angepasst werden, beispielsweise um möglichst ruckelfrei eingekoppelt werden zu können. Vor dem Schaltvorgang kann eine mit dem zweiten Elektromotor drehmomentübertragend verbundene PTO-Kupplung geöffnet werden, um die Hilfsaggregate zumindest temporär nicht zu betreiben. Nach dem Schaltvorgang kann die PTO-Kupplung geschlossen werden, um die Hilfsaggregate wieder betreiben zu können.

Beispielsweise kann bei dem Verfahren am Ende des ersten Geschwindigkeitsbereichs, wenn hochgeschaltet werden soll, die Drehzahl zwischen beiden Elektromotoren synchronisiert werden, um mit dem zweiten Elektromotor möglichst ruckfrei den Fahrantrieb übernehmen zu können. Um bei dem Schaltvorgang den Traktor mittels des zweiten Elektromotors anzutreiben, so dass eine Lastunterbrechung minimiert oder ausgeglichen wird, kann der zweite Elektromotor zuvor in den ersten Zweig eingekoppelt werden bzw. die Verbindungseinrichtung kann in die Geschlossenstellung gestellt werden. Eine Last aus dem Fahrantrieb kann außerdem vom ersten an den zweiten Elektromotor übertragen werden. Sobald der erste Elektromotor lastfrei ist, kann hochgeschaltet werden bzw. der Schaltvorgang vollzogen werden. Während des Hochschaltens, wobei der erste Elektromotor lastfrei ist bzw. der erste Zweig aufgetrennt ist, kann die Drehzahl des ersten Elektromotors entsprechend des höheren Geschwindigkeitsbereichs bzw. des anderen Übersetzungsverhältnisses reduziert werden, so dass ein Einlegen des Gangs ruckfrei gelingen kann. Anschließend kann die Last aus dem Fahrantrieb vom zweiten wieder an den ersten Elektromotor übertragen werden. Der zweite Elektromotor kann danach wieder ausgekoppelt werden bzw. die Verbindungseinrichtung kann in die Offenstellung gestellt werden.

Im Rahmen der Offenbarung steht die Abkürzung "bzw." als Kurzform für "beziehungsweise" und soll alternative, im Grunde gleichwertige und/oder synonyme Merkmale oder Begriffe angeben, um die Idee bzw. den Sinn einer Merkmals- oder Begriffsverwendung näher zu bringen. "Beziehungsweise" und "oder" können stets durch "und/oder" ersetzt werden. Weitere vorteilhafte Ausgestaltungen sind Gegenstand weiterer Unteransprüche und werden nachfolgend anhand in mehreren Figuren dargestellter Ausführungsbeispiele beschrieben. Es zeigen:
- Figur 1: einen batterieelektrischen Traktor in schematischer Seitenansicht
- Figur 2: ein Getriebe des Traktors in schematischer Ansicht

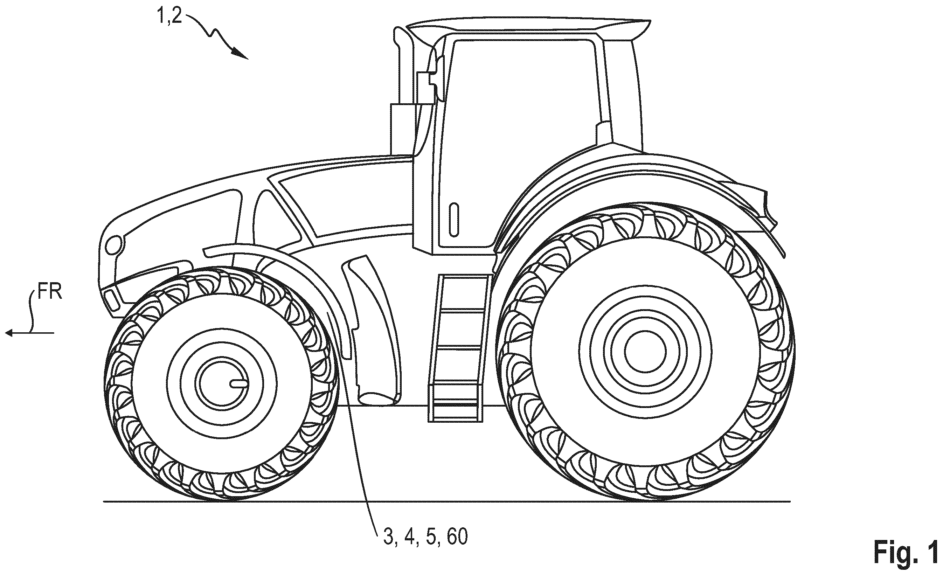

Fig. 1 zeigt einen batterieelektrischen Traktor 1 mit Hilfsaggregaten 2 und mit einem Fahrgestell 3, das eine Antriebsanordnung 4 mit einem elektromotorisch angetriebenen Getriebe 5 für den Fahrantrieb des Traktors 1 umfasst. Ferner weist der Traktor 1 einen elektrischen Energiespeicher 60 auf, der die Antriebsanordnung 4 mit Energie versorgen kann. Der Traktor 1, insbesondere sein Fahrgestell 3, ist elektrifiziert. Der Energiespeicher 60 weist beispielsweise einen Hochvoltverteiler auf oder ist damit verbunden, um die Antriebsanordnung 4 zu versorgen.

Eine Fahrzeuglängsrichtung FR erstreckt sich vorliegend in der Bildebene horizontal bzw. von rechts nach links. Der Traktor 1 weist als Bodeneingriffsmittel an einer vorliegend lenkbaren, pendelnd aufgehängten Vorderachse und einer vorliegend starren Hinterachse jeweils zwei angetriebene Räder auf. Eine Kabine ist oberhalb vom bzw. auf dem Fahrgestellt 3 festgelegt.

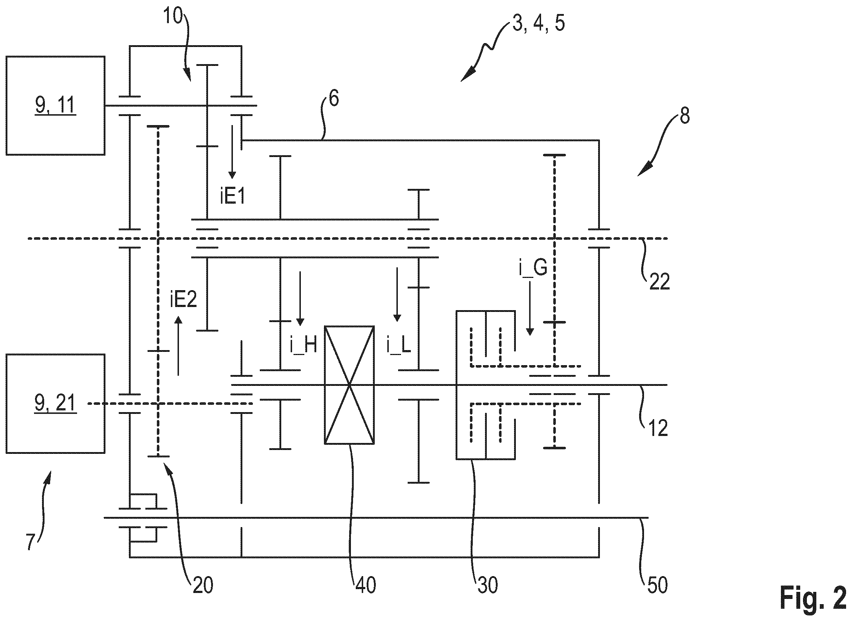

Das in Fig. 2 näher gezeigte Getriebe 5 der Antriebsanordnung 4 des Fahrgestells 3 weist einen ersten Zweig 10 mit dem ersten Elektromotor 11 für den Fahrantrieb des Traktors 1 und einen zweiten Zweig 20 mit dem zweiten Elektromotor 21 für den Antrieb von den Hilfsaggregaten 2 des Traktors 1 auf. Den Elektromotoren 11, 21 ist jeweils ein Wechselrichter 9 zugeordnet. Es ist auch möglich, dass ein Wechselrichter 9 für beide Elektromotoren 11, 21 vorgesehen ist. Der Wechselrichter 9 wird jeweils vom Energiespeicher 60 direkt oder indirekt mit elektrischer Energie versorgt. Der Wechselrichter 9 ist beispielsweise jeweils am Elektromotor 11 bzw. 21 befestigt oder alternativ entfernt davon angeordnet.

Die Elektromotoren 11, 21 können über eine vorliegend nicht näher gezeigte Adapterplatte an dem Gehäuse 6 festgelegt sein.

Die Elektromotoren 11, 21 sind vorliegend außerhalb von einem Gehäuse 6 des Getriebes 5 angeordnet, genauer gesagt auf einer Eingangsseite 7 des Getriebes 5. Die Eingangsseite 7 befindet sich gegenüberliegend von einer weiteren Seite 8. Die Eingangsseite 7 ist vorliegend seitens eines in Fig. 2 nicht gezeigten Rahmens angeordnet, der die Elektromotoren 11, 21 aufnimmt bzw. umgibt. Die Eingangsseite 7 befindet sich bevorzugt in Fahrtrichtung bzw. in Fahrzeuglängsrichtung FR vorne.

Unter näherer Betrachtung des ersten Zweigs 10 ist der erste Elektromotor 11 einstufig, insbesondere drehzahlreduzierend bzw. mit einem Übersetzungsverhältnis iE1 > 1, an einen schaltbaren Getriebeteil angebunden.

Der erste Zweig 10, insbesondere der schaltbare Getriebeteil, ist mittels eines Synchronisators 40 mit einem Synchronring zwischen zumindest zwei, insbesondere jeweils drehzahlreduzierenden, Übersetzungsverhältnissen i_L und i_H schaltbar, im Grunde zwischen einem ersten bzw. niedrigen und einem zweiten bzw. höheren Gang. Der Synchronisator 40 ist zum Bereitstellen der zwei Übersetzungsverhältnisse i_L und i_H zwischen zwei Stellungen und einer Neutralstellung schaltbar. Die Neutralstellung liegt vorliegend zwischen den zwei Stellungen, so dass beim Schalten die Neutralstellung immer zwischengeschaltet wird. In der Neutralstellung ist der erste Zweig 10 aufgetrennt, d.h. es kann vom ersten Elektromotor 11 kein Drehmoment zum Fahrantrieb genutzt werden. In einer der zwei Stellungen ist der erste Zweig 10 nicht aufgetrennt bzw. kann der erste Zweig 10 Drehmoment vom ersten Antriebsmotor 11 bis hin zu einer ersten Ausgangswelle 12 übertragen, und zwar insbesondere mit einem Gesamtübersetzungsverhältnis in Abhängigkeit von dem Übersetzungsverhältnis iE1 und der Auswahl aus den Übersetzungsverhältnissen i_H bzw. i_L. Weitere Übersetzungsverhältnisse bzw. Abstufungen im ersten Zweig 10 sind möglich, aber nicht gezeigt.

Unter Betrachtung des zweiten Zweigs 20 ist der zweite Elektromotor 21 einstufig, insbesondere drehzahlreduzierend bzw. mit einem Übersetzungsverhältnis iE2 > 1, an eine zweite Ausgangswelle 22 angebunden. Die zweite Ausgangswelle 22 ist vorliegend durch einen Teil des schaltbaren Getriebeteils geführt; andere Ausgestaltungen sind denkbar. Weitere Übersetzungsverhältnisse bzw. Abstufungen im zweiten Zweig 20 sind möglich, aber nicht gezeigt.

Die erste Ausgangswelle 12 ist vorliegend zumindest gegenüberliegend von der Eingangsseite 7 bzw. an einer weiteren Seite 8 zugänglich. Die zweite Ausgangswelle 22 ist vorliegend an der Eingangsseite 7 und an der weiteren Seite 8 zugänglich. Die erste Ausgangswelle 12 ist vorliegend gegenüberliegend von der Eingangsseite 7 bzw. an der weiteren Seite 8 zugänglich Die Ausgangswellen 12, 22 sind vorliegend achsparallel angeordnet.

Der zweite Zweig 20 ist mittels einer Verbindungseinrichtung 30 des Getriebes 5 mit dem ersten Zweig 10 drehmomentübertragend, zumindest vorübergehend, insbesondere im Fahrbetrieb, verbindbar. Im Grunde bildet die Verbindungseinrichtung 30 eine Brücke zwischen den Zweigen 10, 20. Insbesondere ist die zweite Ausgangswelle 22 einstufig, beispielsweise drehzahlreduzierend bzw. mit einem Übersetzungsverhältnis i_G > 1 oder drehzahlsteigernd bzw. mit einem Übersetzungsverhältnis i_G < 1, an einen Rotor der Verbindungseinrichtung 30 angebunden.

Die Verbindungseinrichtung 30 weist eine Reibkupplung, genauer gesagt eine nasse Lamellenkupplung, auf. Die Verbindungseinrichtung 30 ist eingerichtet, in einer Geschlossenstellung den ersten 10 und den zweiten 20 Zweig lösbar drehmomentübertragend miteinander zu verbinden, um den zweiten Elektromotor 21 zumindest vorübergehend bzw. temporär für den Fahrantrieb des Traktors 1 zu nutzen.

Die Verbindungseinrichtung 30 kann zwischen der Geschlossenstellung und einer Offenstellung verstellt werden, um einen lösbaren Reibschluss bereitzustellen. In der Geschlossenstellung ist der mit beispielsweise zumindest einer Kupplungslamelle versehene Rotor kraftschlüssig bzw. reibschlüssig mit einem weiteren Rotor, beispielsweise einer Schwungscheibe, der Verbindungseinrichtung 30 verbunden, so dass Drehmoment zwischen erstem 10 und zweitem 20 Zweig übertragen werden kann. Der Rotor und der weitere Rotor können federkraftunterstützt axial gegeneinander gedrückt werden.

Mit der Reibkupplung können Drehzahlabweichungen bzw. Drehzahldifferenzen beim Einkuppeln, das heißt beim Wechsel von einer Offenstellung in die Geschlossenstellung, komfortabel ausgeglichen werden.

Der erste Zweig 10 weist die Verbindungseinrichtung 30 zwischen dem Synchronisator 40 und der ersten Ausgangswelle 12 auf, um den zweiten Elektromotor 21 in der Geschlossenstellung mittelbar mit der ersten Ausgangswelle 12 zu verbinden. Der zweite Zweig ist zum Antreiben der Verbindungseinrichtung 30 über die zweite Ausgangswelle 22 eingerichtet.

Die Verbindungseinrichtung 30 ist beispielsweise mit Öl gefüllt und/oder ist wenigstens teilweise oder - je nach Füllstand bzw. je nach Anordnung - vollständig in einem Getriebeöl des Getriebes 5 eingetaucht angeordnet.

In der Geschlossenstellung können beide Elektromotoren 11 und 21 für den Fahrantrieb genutzt werden, beispielsweise auch nur der erste Elektromotor 11 oder nur der zweite Elektromotor 21.

Der erste Elektromotor 11 und der zweite Elektromotor 21 sind insbesondere im Hinblick auf Leistungsdaten unterschiedlich ausgebildet. Der erste Elektromotor 11 weist ein höheres maximales Drehmoment als der zweite Elektromotor auf. Der zweite Elektromotor 21 kann eine größere Baulänge aufweisen als der erste Elektromotor 11. Der erste 11 und der zweite Elektromotor 21 sind nebeneinander und achsparallel zueinander angeordnet.

Das Getriebe 5 weist ferner eine Übertragungswelle 50 auf. Diese erstreckt sich beispielsweise ausgehend von einem hier nicht gezeigten Hinterachsgetriebe bzw. Hinterachsdifferential und/oder Verteilergetriebe. Die Übertragungswelle 50 ist beispielsweise vorgesehen, den Fahrantrieb im Fall eines mehrachsigen Fahrantriebs oder Allradantriebs bereitzustellen.

Die Übertragungswelle 50, die erste Ausgangswelle 12, die zweite Ausgangswelle 22, der schaltbare Getriebeteil, und/oder andere Wellen des Getriebes sind, zumindest abschnittsweise und/oder teilweise, vorzugsweise an jeweils wenigstens zwei axialen Stellen, im Gehäuse 6 des Getriebes 5 gelagert und/oder sind zueinander achsparallel angeordnet.

Dargestellt und beschrieben ist hinsichtlich Fig. 2 eine Antriebsanordnung 4 für einen batterieelektrischen Traktor 1, die einen ersten 11 und einen zweiten 21 Elektromotor aufweist und eingerichtet ist, den Traktor 1 in mindestens zwei Geschwindigkeitsbereichen mittels des ersten Elektromotors 11 anzutreiben und den Traktor 1 bei einem Schaltvorgang zwischen den mindestens zwei Geschwindigkeitsbereichen bzw. den zwei Geschwindigkeitsbereichen mittels des zweiten Elektromotors 21, insbesondere zumindest vorübergehend und zum Abstützen einer Lastunterbrechung, anzutreiben.

Nicht detailliert dargestellt ist eine Antriebsanordnung, die eingerichtet ist, einen Traktor in drei oder mehr Geschwindigkeitsbereichen anzutreiben.

Dargestellt und beschrieben ist hinsichtlich Fig. 1 ein batterieelektrischer Traktor 1, aufweisend eine Antriebsanordnung 4 für den Fahrantrieb des Traktors 1 und zum Antreiben von Hilfsaggregaten 2 des Traktors 1.

Die Antriebsanordnung 4 der Fig. 2 eignet sich zur Durchführung eines Verfahrens zum Betreiben eines batterieelektrischen Traktors 1 mit einer ein Getriebe 5 aufweisenden Antriebsanordnung 4, wobei der Traktor 1 mittels eines ersten Elektromotors 11 in einem ersten Geschwindigkeitsbereich angetrieben wird, wobei ein Schaltvorgang des Getriebes 5 durchgeführt wird und der Traktor 1 bei dem Schaltvorgang mittels eines zweiten Elektromotors 21 angetrieben wird, und wobei der Traktor 1 nach dem Schaltvorgang mittels des ersten Elektromotors 11 in einem zweiten Geschwindigkeitsbereich angetrieben wird und vor dem Schaltvorgang der zweite Elektromotor 21 an eine einer Fahrgeschwindigkeit des Traktors 1 entsprechenden Drehzahl angepasst wird.

Dargestellt und beschrieben ist hinsichtlich Fig. 2 eine Antriebsanordnung 4, die ein Getriebesteuergerät aufweist, das eingerichtet ist, zwei Elektromotoren 11, 21 der Antriebsanordnung 4 anzusteuern, um eine durch den ersten Elektromotor 11 bereitgestellte Ausgangsdrehzahl für einen Fahrantrieb zwischen zwei Geschwindigkeitsbereichen zu schalten, und um beim Schalten zwischen den Geschwindigkeitsbereichen ein Unterstützungsmoment durch den zweiten Elektromotor 21 bereitzustellen, so dass ein Schaltruck bzw. eine Drehmomentreduktion am Ausgang der Antriebsanordnung 4 für den Fahrantrieb minimiert oder vermieden wird.

Die Antriebsanordnung 4 bzw. das Getriebesteuergerät ist insbesondere eingerichtet, die zwei Elektromotoren 11, 21 der Antriebsanordnung 4 gleichzeitig für den Fahrantrieb zu nutzen.

In der Praxis kann sich die Funktionsweise des in Fig. 2 gezeigten und voranstehend beschriebenen Getriebes 5 zumindest auszugsweise wie folgt darstellen.

Erster Geschwindigkeitsbereich: Der zweite Elektromotor 21 versorgt die zweite Ausgangswelle 22, über die beispielsweise Hilfsaggregate wie Hydraulikpumpen angetrieben werden. Die Hilfsaggregate können in einem nicht dargestellten Hilfsgetriebe bzw. PTO-Getriebe verbaut sein. Eine Kupplung des PTO-Getriebes kann geöffnet sein, wenn keine Versorgung von der zweiten Ausgangswelle 22 benötigt ist, oder auch geschlossen sein. Falls der Betrieb von Hilfsaggregaten angefordert wird, kann die Kupplung des PTO-Getriebes geschlossen werden und/oder der zweite Elektromotor 21 die zweite Ausgangswelle 22 mit der angeforderten Drehzahl betreiben. Der erste Elektromotor 11 versorgt über den in das Übersetzungsverhältnis i_L geschalteten bzw. eingerückten Synchronisator 40 die erste Ausgangswelle 12. In diesem Betriebszustand kann der Traktor 1 den Geschwindigkeitsbereich von beispielsweise ± 20 km/h abdecken. Die Verbindungseinrichtung 30 ist insbesondere in der Offenstellung. Die zwei Elektromotoren 11, 21 können im Grunde unabhängig voneinander betrieben werden.

Schaltvorgang bzw. Hochschalten, wenn keine Hilfsaggregate angetrieben werden bzw. ohne PTO: Am Ende des ersten Geschwindigkeitsbereichs können die Drehzahlen zwischen dem ersten 10 und dem zweiten 20 Zweig synchronisiert werden, insbesondere indem der zweite Elektromotor 21 entsprechend angesteuert wird. Die Verbindungseinrichtung 30 kann die Verbindung zwischen den Zweigen 10, 20 bereitstellen bzw. in die Geschlossenstellung geschaltet werden. Danach sind beide Zweige 10, 20 gekoppelt und damit beide Elektromotoren 11, 21 mit der ersten Ausgangswelle 12 verbunden. Die Elektromotoren 11, 21 werden angesteuert, um die Last vom ersten 11 auf den zweiten 21 Elektromotor zu übertragen, damit schließlich nur noch der zweite Elektromotor 21 den Fahrantrieb bereitstellt. Sobald der erste Elektromotor 11 lastfrei ist, kann der Synchronisator 40 vom Übersetzungsverhältnis i_L in die Neutralstellung bzw. in die Mitte geschaltet werden. Die Drehzahl des ersten Elektromotors 11 wird dann reduziert, so dass eine Drehzahlgleichheit zwischen der ersten Ausgangswelle 12 und dem anderen Übersetzungsverhältnis i_H entsteht, in das der Synchronisator 40 geschaltet werden soll. Anschließend kann der Synchronisator 40 zum Übersetzungsverhältnis i_H bzw. nach rechts geschaltet werden. Dann kann der Lastübertrag aus dem Fahrantrieb zurück vom zweiten 21 auf den ersten 11 Elektromotor erfolgen. Die Verbindungseinrichtung kann dann die Verbindung zwischen den Zweigen 10, 20 wieder trennen bzw. in die Offenstellung geschaltet werden. Dann ist der zweite Elektromotor 21 wieder unabhängig für die PTO verwendbar, also zum Antrieb der zweiten Ausgangswelle 22 bzw. Zapfwelle, beispielsweise um die Hilfsaggregate wie die Hydraulikpumpen zu versorgen.

Zweiter Geschwindigkeitsbereich: Im zweiten Geschwindigkeitsbereich kann die Ausgangswelle 22, über die beispielsweise Hilfsaggregate wie die Hydraulikpumpen angetrieben werden, wie bereits im ersten Geschwindigkeitsbereich mittels des zweiten Elektromotors 21 versorgt werden. Die Kupplung des PTO-Getriebes kann geöffnet oder geschlossen sein. Der Synchronisator 40 ist ins Übersetzungsverhältnis i_H bzw. in den höheren Gang geschaltet. Bei geringeren Lasten wie z.B: Straßenfahrt und/oder ohne Anhänger kann der Traktor 1 dauerhaft und/oder ausgehend vom Stillstand in diesem Übersetzungsverhältnis bzw. im höheren Gang fahren.

Schaltvorgang bzw. Hochschalte, wenn Hilfsaggregate abgetrieben werden bzw. mit PTO: Im PTO-Betrieb bzw. wenn die zweite Ausgangswelle 22 zum Antrieb der Hilfsaggregate verwendet wird, ist ist die Drehzahl der zweiten Ausgangswelle 22 regelmäßig vorgegeben, so dass der Schaltpunkt nicht unter Verwendung des zweiten Zweigs 20 bzw. des zweiten Elektromotors 21 abgestützt werden kann. Deshalb kann ein Schaltvorgang bzw. das Hochschalten auch mit Zugkraftunterbrechung erfolgen. Dabei kann der erste Elektromotor 11 mit zum Übersetzungsverhältnis i_L geschalteten Synchronisator 40 den über die erste Ausgangswelle 12 betriebenen Fahrantrieb bereitstellen. Dann wird der erste Elektromotor 11 lastfrei geschaltet, um den Synchronisator 40 in die Neutralstellung zu schalten. Die Drehzahl des ersten Elektromotors 11 wird dann reduziert, so dass eine Drehzahlgleichheit zwischen der ersten Ausgangswelle 12 und dem anderen Übersetzungsverhältnis i_H entsteht, in das der Synchronisator 40 geschaltet werden soll. Anschließend kann der Synchronisator 40 zum Übersetzungsverhältnis i_H bzw. nach rechts geschaltet werden. Anschließend kann der Synchronisator 40 zum Übersetzungsverhältnis i_H bzw. nach rechts geschaltet werden. Dann kann der erste Elektromotor 11 im nun eingelegten höheren Gang den Fahrantrieb leisten.

Eine Drehzahl der zweiten Ausgangswelle 22 kann mit der voranstehend beschriebenen Verschaltung immer, zumeist außer im Schaltpunkt und/oder im PTO-Betrieb, auf ein Minimum abgesenkt werden, so dass ein großer Effizienzvorteil geschaffen wird.

Die Verbindungseinrichtung 30 kann durch den Reibschluss Drehzahldifferenzen ausgleichen und kann dadurch zu jeder Zeit sicher Hilfsaggregate, insbesondere die Hydraulik, vom Fahrantrieb entkoppeln. Dieser Aspekt ist in Bezugs auf Sicherheit von großem Vorteil.

### Bezugszeichenliste:

- 1: Traktor
- 2: Hilfsaggregat
- 3: Fahrgestell
- 4: Antriebsanordnung
- 5: Getriebe
- 6: Gehäuse
- 7: Eingangsseite
- 8: weitere Seite
- 9: Wechselrichter
- 10: erster Zweig
- 11: erster Elektromotor
- 12: erste Ausgangswelle
- 20: zweiter Zweig
- 21: zweiter Elektromotor
- 22: zweite Ausgangswelle
- 30: Verbindungseinrichtung
- 40: Synchronisator
- 50: Übertragungswelle
- 60: Energiespeicher

- FR: Fahrzeuglängsrichtung
- i_E1: Übersetzungsverhältnis
- i_E2: Übersetzungsverhältnis
- i_L: Übersetzungsverhältnis
- i_H: Übersetzungsverhältnis
- i_G: Übersetzungsverhältnis

## Patentansprüche

1. Antriebsanordnung (4) für einen batterieelektrischen Traktor (1), die Antriebsanordnung (4) aufweisend
ein Getriebe (5) mit einem einen ersten Elektromotor (11) umfassenden ersten Zweig (10) für den Fahrantrieb des Traktors (1) und einem einen zweiten Elektromotor (21) umfassenden zweiten Zweig (20) für den Antrieb von Hilfsaggregaten (2) des Traktors (1), wobei der erste Zweig (10) zwischen zumindest zwei Übersetzungsverhältnissen schaltbar ist; und
eine Verbindungseinrichtung (30), die eingerichtet ist, den ersten (10) und den zweiten (20) Zweig drehmomentübertragend miteinander zu verbinden, um den zweiten Elektromotor (21) für den Fahrantrieb des Traktors (1) zu nutzen.

2. Antriebsanordnung (4) nach Anspruch 1, wobei die Verbindungseinrichtung (30) eingerichtet ist, in einer Geschlossenstellung den ersten (10) und den zweiten (20) Zweig lösbar miteinander zu verbinden.

3. Antriebsanordnung (4) nach Anspruch 2, wobei die Reibkupplung (30) eine Lamellenkupplung, insbesondere nasse Lamellenkupplung, aufweist oder ist.

4. Antriebsanordnung (4) nach einem der voranstehenden Ansprüche, wobei der erste Zweig (10) einen Synchronisator (40) aufweist, der zum Bereitstellen der zumindest zwei Übersetzungsverhältnisse in zumindest zwei Stellungen schaltbar ist und zudem in eine Neutralstellung schaltbar ist, wobei in der Neutralstellung der erste Zweig (10) aufgetrennt ist.

5. Antriebsanordnung (4) nach dem voranstehenden Anspruch, wobei der erste Zweig (10) die Verbindungseinrichtung (30) zwischen dem Synchronisator (40) und einer ersten Ausgangswelle (12) aufweist, insbesondere auf der ersten Ausgangswelle (12) aufweist, um den zweiten Elektromotor (21) zumindest mittelbar mit der ersten Ausgangswelle (12) zu verbinden, wenn die Verbindungseinrichtung (30) in der Geschlossenstellung ist.

6. Antriebsanordnung (4) nach dem voranstehenden Anspruch, wobei der zweite Zweig (20) zum Antreiben der Verbindungseinrichtung (30) über eine zweite Ausgangswelle (22) eingerichtet ist.

7. Antriebsanordnung (4) nach einem der voranstehenden Ansprüche, wobei der erste Elektromotor (11) ein höheres maximales Drehmoment als der zweite Elektromotor (21) aufweist, und/oder der erste (11) und der zweite (21) Elektromotor an einer Eingangsseite (7) des Getriebes (5) nebeneinander und/oder achsparallel zueinander angeordnet sind.

8. Antriebsanordnung (4) nach einem der voranstehenden Ansprüche, wobei die zweite Ausgangswelle (22) parallel zur ersten Ausgangswelle (12) angeordnet ist und/oder für den Antrieb von Hilfsaggregaten (2) an gegenüberliegenden Seiten des Getriebes (5) zugänglich ist.

9. Antriebsanordnung (4) für einen batterieelektrischen Traktor (1), wobei die Antriebsanordnung (4) einen ersten (11) und einen zweiten (21) Elektromotor aufweist und eingerichtet ist, den Traktor (1) in mindestens zwei Geschwindigkeitsbereichen mittels des ersten Elektromotors (11) anzutreiben und den Traktor (1) bei einem Schaltvorgang zwischen den Geschwindigkeitsbereichen mittels des zweiten Elektromotors (21) anzutreiben.

10. Batterieelektrischer Traktor (1), aufweisend eine Antriebsanordnung (4) nach einem der voranstehenden Ansprüche für den Fahrantrieb des Traktors (1) und optional zum Antreiben von Hilfsaggregaten (2) des Traktors (1).

11. Verfahren zum Betreiben eines batterieelektrischen Traktors (1) mit einer ein Getriebe (5) aufweisenden Antriebsanordnung (4), wobei
der Traktor (1) mittels eines ersten Elektromotors (11) in einem ersten Geschwindigkeitsbereich angetrieben wird und optional Hilfsaggregate (2) des Traktors (1) mittels eines zweiten Elektromotors (21) angetrieben werden,
ein Schaltvorgang des Getriebes (5) durchgeführt wird und der Traktor (1) bei dem Schaltvorgang mittels eines/des zweiten Elektromotors (21) angetrieben wird, und
der Traktor (1) nach dem Schaltvorgang mittels des ersten Elektromotors (11) in einem zweiten Geschwindigkeitsbereich angetrieben wird und optional vor dem Schaltvorgang der zweite Elektromotor (21) an eine einer Fahrgeschwindigkeit des Traktors (1) entsprechenden Drehzahl angepasst wird.
